# FASCICULE DE BREVET EUROPEEN

(11) **EP 1 690 429 B1**
(45) Date de publication et mention de la délivrance du brevet: **05.08.2009**
(21) Numéro de dépôt: 04805469.6
(22) Date de dépôt: 17.11.2004
(51) Int. Cl.: H04W 88/08, H04B 7/24

(54) **RESEAU DE TELEPHONIE MOBILE POUR UNE COMMUNICATION ENTRE DEUX POSTES DE COMMUNICATION**
MOBILTELEFONNETZ FÜR DIE KOMMUNIKATION ZWISCHEN ZWEI KOMMUNIKATIONSAPPARATEN
MOBILE TELEPHONE NETWORK FOR COMMUNICATION BETWEEN TWO COMMUNICATION SETS

(30) Priorité: 17.11.2003 FR 0313391
(43) Date de publication de la demande: 16.08.2006
(73) Titulaire: E-Blink, 91800 Boussy St. Antoine (FR)
(72) Inventeur: ROLLAND, Alain, F-91480 Quincy sous Senart (FR); ROLLAND, Thierry, F-91480 Quincy sous Senart (FR); ZAGHDOUD, Mohamed-tahar, F-94700 Maisons Alfort (FR)
(74) Mandataire: Delaveau, Sophie
(86) Numéro de dépôt international: PCT/FR2004/002932
(87) Numéro de publication internationale: WO 2005/051017

(56) Documents cités:
- WO-A-92/10890
- FR-A- 2 747 867
- US-A- 5 768 268
- US-A- 6 072 994
- US-A1- 2002 028 655
- US-A1- 2003 027 597
- US-B1- 6 389 059
- US-B1- 6 640 110
- PATENT ABSTRACTS OF JAPAN vol. 009, no. 004 (E-288), 10 janvier 1985 (1985-01-10) & JP 59 154827 A (MATSUSHITA DENKI SANGYO KK), 3 septembre 1984 (1984-09-03)

## Description

"Réseau de téléphonie mobile pour une communication entre deux postes de communication"

L'invention concerne un réseau de communication local entre un premier poste mobile tel qu'un téléphone mobile et un deuxième poste, notamment un poste fixe tel qu'un téléphone fixe, selon le préambule de la revendication 1.

Un réseau de ce type est décrit dans le document US 2003/027597. Mais dans ce document il est déconseillé d'utiliser des liaisons de transmission par radio-fréquence, qui sont alors remplacées par des liaisons optiques, ce qui présente l'inconvénient majeur que le changement de type de transmission complique la structure du réseau et fait perdre les avantages qui sont inhérents à des transmissions par radio-fréquence.

L'invention a pour but de proposer un système qui résoud les problèmes occasionnés par le système de radio-fréquence tout en conservant ses avantages.

Pour atteindre ce but, le système selon l'invention comporte des caractéristiques qui sont énoncées dans la partie caractérisante de la revendication 1.

L'invention sera mieux comprise et d'autres buts, caractéristiques, détails et avantages de celle-ci apparaîtront plus clairement de la description explicative qui va suivre faite en référence aux dessins schématiques annexés donnés uniquement à titre d'exemple illustrant un mode de réalisation de l'invention et dans lesquels :
- la figure 1 montre le schéma général d'un système de communication entre un téléphone mobile et un téléphone fixe, par l'intermédiaire d'un réseau de téléphonie mobile selon l'invention ;
- la figure 2 est un schéma fonctionnel illustrant la structure du dispositif de liaison indiquée en 6 sur la figure 1, du réseau de téléphonie mobile selon l'invention ;
- la figure 3 est un logigramme relatif aux fonctions de la communication entre l'antenne et la baie du réseau de téléphonie mobile selon l'invention ;
- la figure 4 est un logigramme relatif aux fonctions de la communication entre la baie et l'antenne du réseau de téléphonie mobile selon l'invention ;
- la figure 5 est un logigramme relatif à la fonction « multiplexage » entre les différentes fréquences de fonctionnement du réseau de téléphonie ;
- la figure 6 est une vue en perspective d'un immeuble sur lequel est installé un réseau selon l'invention ;
- la figure 7 est une vue en perspective illustrant à plus grande échelle une partie de la figure 6 ;
- la figure 8 est une vue schématique d'un réseau de téléphonie mobile comprenant trois antennes relais susceptibles de fonctionner à trois bandes de transmission différentes.

L'invention sera décrite ci-après dans son application à un système de communication entre un téléphone mobile indiqué en 1 et un téléphone fixe indiqué en 2 par l'intermédiaire d'un réseau de téléphonie mobile généralement appelé GSM (Global System Mobile) 3 et du réseau fixe 4.

A l'intérieur du réseau de téléphonie mobile GSM 3, la communication passe d'une antenne relais 5 destinée à communiquer avec le téléphone mobile 1 par une liaison de transmission de données 6 à un ensemble fixe comportant une baie de radiocommunication 7 qui constitue un système de transmission de base appelé généralement BTS (Base Transceiver System), une station de contrôle de base 8 appelée communément BSC (Base Station Controller) et un centre de communication 9 appelé MSC (Mobile Switching Center). Bien entendu, si la communication va du téléphone fixe 2 au mobile 1, les signaux circulent dans le sens inverse.

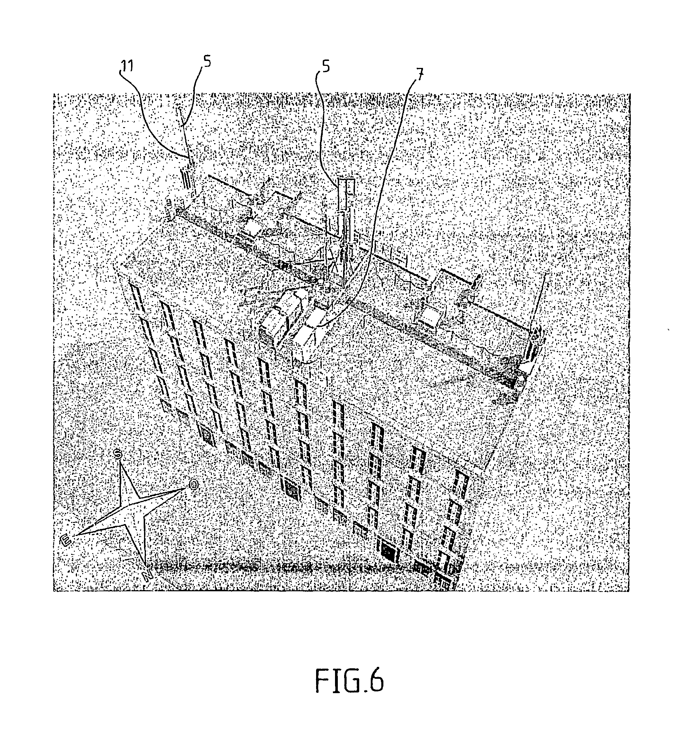

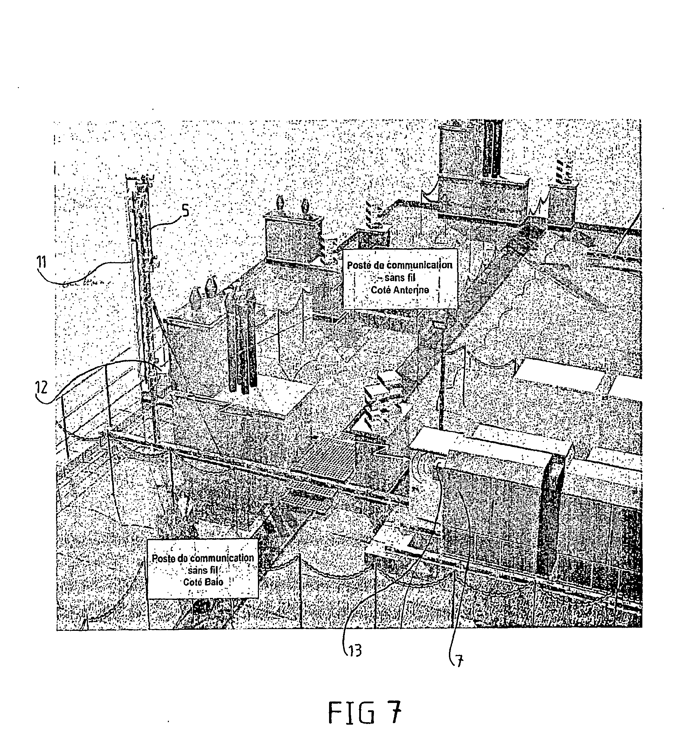

L'antenne relais 5 pourrait être du type multibande, par exemple monobande, bi-bande ou tri-bande et recevoir et émettre dans des bandes ou canaux de fréquences de 900, 1800 ou 2200 MHz. L'antenne est supportée par un mât indiqué en 11 monté par exemple sur la terrasse d'un immeuble comme on le voit sur les figures 6 et 7.

Conformément à l'invention, la liaison entre l'antenne 5 et la baie de radiocommunication 7 est réalisée sous forme d'une liaison par fréquence radio. La transmission sans fil a lieu entre un dispositif d'équipement électronique prévu au pied du mât 11 de l'antenne, enfermé dans un boîtier 12 et un dispositif d'équipement électronique enfermé dans un boîtier 13 associé à la baie de communication 7. Si l'antenne est du type multibande, un boîtier 12 est prévu pour chaque bande. Une baie est prévue pour chaque bande de fréquence de l'antenne 5. Les boîtiers d'antenne 12 et de baie 13 sont équipés de moyens émetteurs et récepteurs des signaux à transmettre, la voie spécifique de transmission des signaux sans fil étant indiquée en 14.

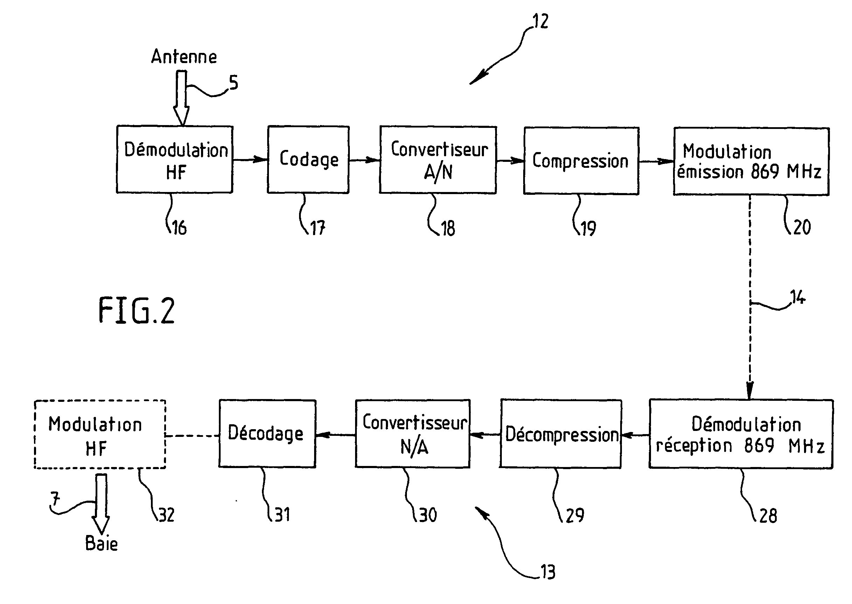

En se référant à la figure 2, on constate que la liaison par fréquence radio sans fil 6 comporte essentiellement, du côté de l'antenne 5, enfermés dans le boîtier d'antenne 12, successivement à partir de l'antenne, un module de démodulation haute fréquence 16, un module de codage 17, un convertisseur analogique/numérique 18, un module de modulation et d'émission 20 qui émet ou reçoit les signaux transmis sans fil sur la voie de transmission 14.

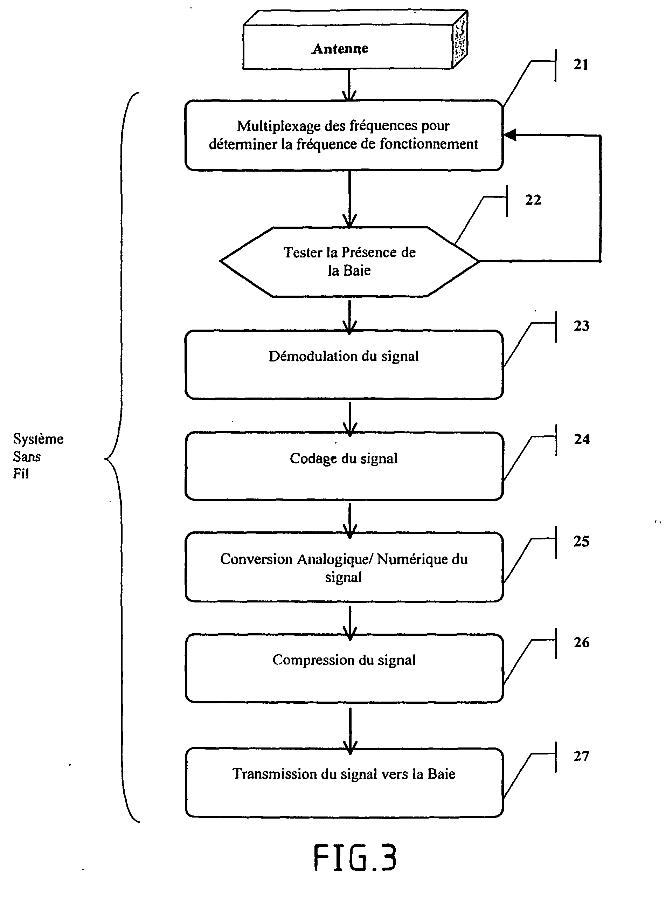

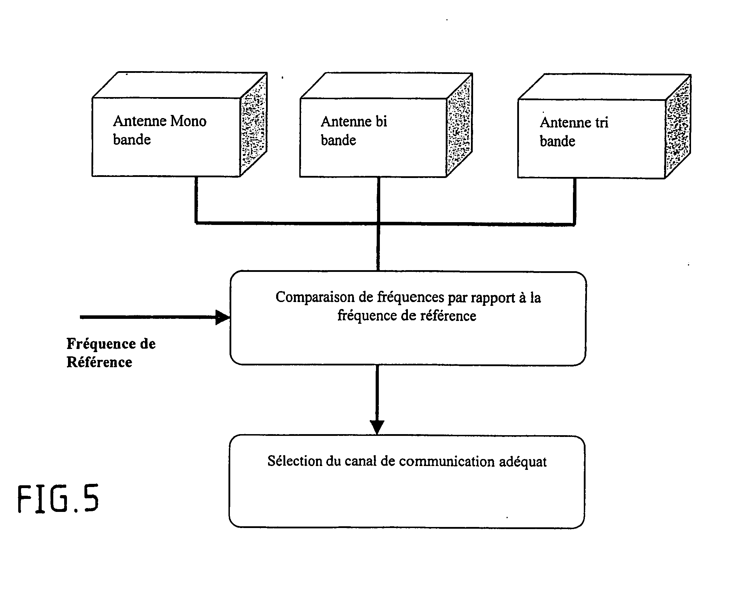

Les modules qui viennent d'être évoquées permettent d'accomplir les opérations qui sont indiquées sur l'organigramme ou logigramme de la figure 3. Le module de multiplexage et de démodulation 16 a pour fonction d'assurer à une opération 21 le multiplexage des fréquences pour identifier la fréquence de fonctionnement, c'est-à-dire la bande de fréquence dans laquelle les signaux arrivent à l'antenne ou sont émis par celle-ci. A cette fin, le module de multiplexage est pourvu d'une source de fréquence de référence, comme on le voit sur la figure 5, qui fournit des fréquences correspondant aux bandes de transmission de l'antenne. Le module de multiplexage effectue l'identification de la fréquence en procédant à une comparaison entre la fréquence du signal d'entrée et les fréquences de référence appropriées. Si l'antenne GSM 5 utilise les trois bandes de canaux de fréquences de 900 MHz, 1800 MHz et 2200 MHz, le signal d'entrée sera comparé tout d'abord au signal de référence 900 MHz puis à celui de 1800 MHz et à la fin au signal de 2200 MHz. Ce multiplexage se fait avant toute manipulation des signaux.

Conformément à la figure 3, après le multiplexage, dans une étape 22, on procède à un test de présence d'une baie correspondant, qui a pour but de s'assurer que le réseau GSM dispose d'une baie 7 susceptible de fonctionner à la fréquence des signaux reçus. Plus précisément, à l'opération 22, on effectue un test de réponse à cette fréquence, côté de baie radio 7, consistant par exemple à une émission suivie d'une écoute sur cette fréquence. En l'absence d'une réponse, on scrute la fréquence suivante en revenant à l'étape 21 pour établir alors les conditions d'une autre communication sur un autre canal de fréquence.

En présence d'une réaction positive, indiquant la présence d'une baie communicante 7 sur la fréquence identifiée, la communication entre l'antenne et la baie est établie. Le signal analogique de haute fréquence reçu et venant de l'antenne est alors démodulé à l'étape 23 à un niveau basse fréquence. Lors de la démodulation, le signal est démodulé pour éliminer le signal de modulation ou la porteuse qui est la composante de haute fréquence dans le signal.

A l'opération 24 suivante de codage, on procède à un échantillonnage du signal. Pour éviter des phénomènes indésirables résultant de l'utilisation habituelle d'une diode du type Varicap sur laquelle est superposée la modulation et provoquant un décalage de fréquence de -Fm ou +Fm selon qu'il s'agit d'un niveau logique « 0 » ou « 1 », avec le risque que la boucle de verrouillage a tendance à rattraper le décalage dû à la modulation, on découpe, dans le cas de l'invention, avantageusement ses niveaux en une alternance bien définie de « 0 » et « 1 » de façon à ce que la valeur moyenne du signal modulant soit nulle. De cette façon, quelque soit le contenu de la modulation, la fréquence porteuse ne varie pas.

Puis, on procède à la conversion analogique-numérique à l'opération 25. Lors de la conversion, la composante basse fréquence qui présente le signal utile et résulte de l'opération de démodulation est converti en numérique. La conversion analogique-numérique est cadencée par rapport à une fréquence d'échantillonnage supérieure ou égale à deux fois la fréquence du signal utile.

A l'opération suivante de compression du signal, la suite binaire reçue est découpée en trames conformes à la norme du réseau GSM. Ces trames sont compressées avant d'être envoyées à la baie 7. La compression des données assure une réduction de la taille des trames, ce qui permet de respecter le débit d'émission/réception imposé par la norme GSM. A l'opération 27, les trames sont transmises par le module d'émission 20 sans fil sur une bande de fréquences appropriée qui pourrait être comprise dans un spectre de fréquences de par exemple de 400 MHz à 18 GHz. Ce spectre relativement large permet de choisir un canal de transmission sans fil avantageux pour des questions économiques ou techniques. Par exemple, en émettant sur une bande de fréquence de 869 MHz, on obtient l'avantage d'utiliser une bande de fréquence qui est publique en France et dont l'utilisation est gratuite.

Le signal ainsi émis par le module de modulation et d'émission 20 est reçu par un module de démodulation/réception 28 qui fait partie du boîtier 13 de la baie de radiofréquence 7. Puis le signal reçu passe successivement par des modules de décompression 29, de convertisseur numérique-analogique 30, un module de découdage 31 et un module facultatif de modulation haute fréquence 32 pour parvenir à la baie 7.

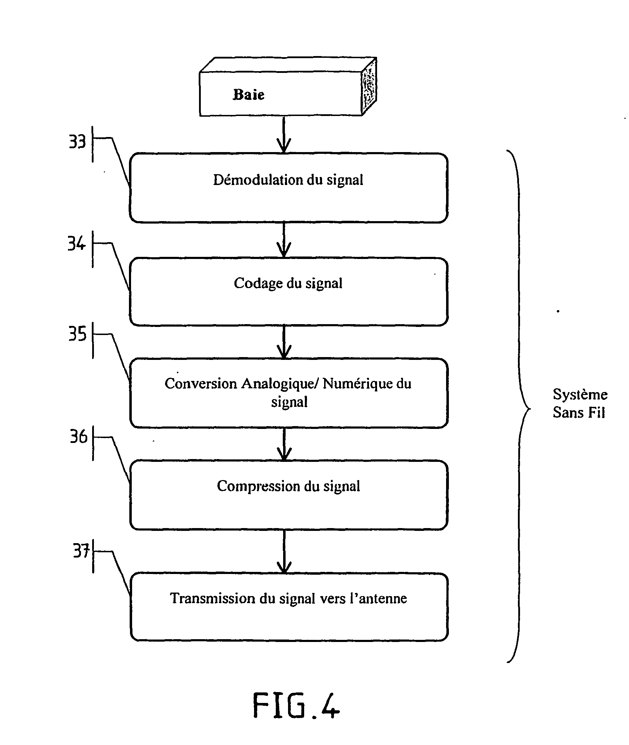

La description de l'invention a été faite en prenant comme exemple l'établissement d'une communication dans la direction antenne-baie. Bien entendu, le processus d'établissement d'une communication dans le sens inverse, c'est-à-dire dans le sens baie-antenne correspond à celui qui vient d'être décrit et est illustré à la figure 4, celle-ci indique la succession des opérations effectuées en aval de la baie 7, à savoir des opérations de démodulation 33 du signal, de codage 34 du signal, de conversion analogique/numérique 33, de compression 34 du signal et de transmission du signal vers l'antenne, effectuées respectivement par les modules de modulation 32, de décodage 31, de convertisseur 30, de décompression 29 et de démodulation 28.

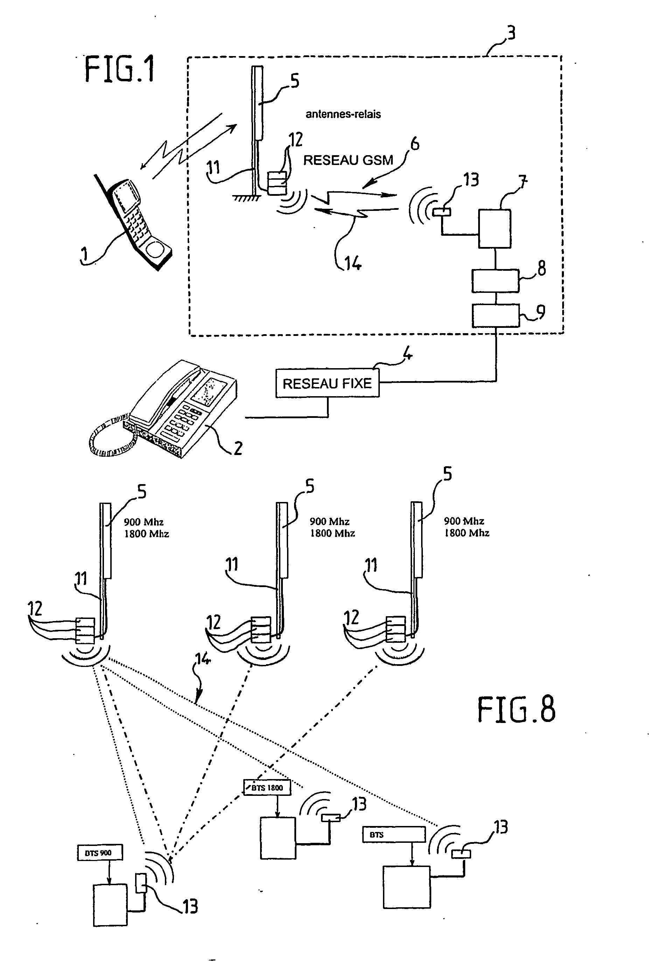

Les figures 6 et 7, qui sont des vues en perspective d'un immeuble dont le toit ou la terrasse porte trois antennes relais 5 telles que représentées sur la figure 1 et des équipements électroniques appropriés, permettent de comprendre l'avantage par rapport à l'état de la technique que procure l'utilisation des liaisons sans fil à la place des câbles coaxiaux employés jusqu'à présent. Ces figures illustrent non seulement l'économie que la suppression de câbles permet de réaliser, mais également que, du fait que l'écart entre les antennes et les baies peut être plus important, l'invention permet la disposition des armoires constituant les baies à des endroits avantageux. Dans le cas de l'invention, ce ne sont donc pas les conditions de l'installation qui dictent la disposition des armoires, mais ceux-ci peuvent être choisis librement en fonction d'autres aspects par exemple déterminés par l'architecture de l'immeuble. Dans le cas de l'invention, la distance entre les antennes GSM et les baies radio peut être de 10 à 500 m selon l'emplacement de la baie par rapport aux antennes. La portée assurée est fonction de la bande de fréquences utilisée et la puissance permise. A titre d'exemple, pour la bande de 869 MHz, la portée du système est de l'ordre de 400 m. A titre de comparaison, dans les systèmes connus à câbles coaxiaux, la baie doit être située dans un périmètre de 30 m de l'antenne.

D'autre part, un autre avantage de l'invention réside dans le fait que l'équipement électronique de la liaison sans fil permet l'intégration de certaines fonctionnalités des baies radios, comme l'amplification ou l'atténuation des signaux, ce qui offre la possibilité d'alléger la structure interne des baies radios et donc de réduire leur poids actuellement de l'ordre de 500 kg qui représente une forte contrainte pour leur mise en place sur le site lors de leur installation.

La figure 8 illustre particulièrement l'avantage que procure l'invention. En effet, le système représenté comporte trois antennes multifréquences de par exemple 900 MHz, 1800 MHz et 2200 MHz destinées à coopérer avec trois baies de radiofréquence 7 susceptibles de fonctionner respectivement à 900 MHz, 1800 MHz et 2200 MHz. On constate que l'utilisation des liaisons sans fil entre les antennes et les baies permet de faire coopérer chaque antenne aisément avec chacune des baies, ce qui implique la présence de neuf liaisons possibles. Ces liaisons peuvent être réalisées aisément sous forme de liaison sans fil, mais seraient problématiques si on devait les réaliser selon la technique actuelle des câbles coaxiaux.

## Revendications

1. Réseau de communication local entre un premier poste mobile, tel qu'un téléphone mobile, et un deuxième poste, tel qu'un téléphone fixe, par l'intermédiaire d'une antenne relais et d'une liaison de transmission de données reliant l'antenne à une baie de radio-fréquence fixe, la liaison de transmission étant une liaison de transmission de radio-fréquence sans fil, **caractérisé en ce que** la liaison de transmission entre l'antenne (5) et la baie de radiocommunication (7) comporte un dispositif de démodulation (23) du signal de haute fréquence, reçu par l'antenne (5), à un niveau basse fréquence pour éliminer le signal de modulation ou la porteuse haute fréquence dans le signal reçu.

2. Réseau de communication selon la revendication 1, **caractérisé en ce que** la liaison sans fil (6) comprend des moyens d'émission et de réception de signaux à une fréquence comprise entre 400MHz et 18GHz, la fréquence pouvant être choisie dans cette gamme de fréquence.

3. Réseau selon la revendication 2, **caractérisé en ce que** la liaison sans fil 6 comporte un dispositif électronique (12) associé à l'antenne (5) et un dispositif électronique (13) associé à la baie (7) et une voie de transmission sans fil (14) entre ces deux dispositifs.

4. Réseau selon la revendication 3, **caractérisé en ce que** le dispositif électronique d'antenne (12) comporte des moyens convertisseurs analogiques/numériques (18) et le dispositif électronique de baie (13) comporte des moyens de convertisseur numériques/analogiques (30).

5. Réseau selon l'une des revendications 3 ou 4, **caractérisé en ce que** les dispositifs électroniques d'antenne et de baie (13) comporte des moyens de compression ou de décompression des signaux à transmettre.

6. Réseau selon l'une des revendications 1 à 5, **caractérisé en ce que,** dans le cas d'une antenne multibande (5), le dispositif électronique d'antenne (12) comporte des moyens d'identification du canal sur lequel les signaux à transmettre sont reçus par l'antenne.

7. Réseau selon l'une des revendications 1 à 6, **caractérisé en ce que** le dispositif électronique d'antenne (12) comporte des moyens de vérification de la présence d'une baie (7) susceptible de fonctionner à la fréquence à laquelle les signaux à transmettre sont reçus par l'antenne (5).

8. Réseau selon l'une des revendications 1 à 7, **caractérisé en ce qu'**il comporte une pluralité de baies (7) dont chacune est susceptible de fonctionner à une fréquence prédéterminée, ces baies étant susceptibles de communiquer avec une antenne multibande appropriée.

## Claims

1. A local communication network between a first mobile unit, such as a mobile phone, and a second unit, such as a fixed phone, via a relay antenna and a data transmission link connecting the antenna to a fixed radiofrequency bay, the transmission link being a wireless radiofrequency transmission link, **characterized in that** the transmission link between the antenna (5) and the radiocommunications bay (7) comprises a device (23) for demodulating the high frequency signal, received by the antenna (5), to a low frequency level, in order to remove the modulating signal or the high frequency carrier from the signal received.

2. The communication network according to claim 1, **characterized in that** the wireless link (6) comprises means for transmitting and receiving signals at a frequency between 400 MHz and 180 GHz, with the frequency being selectable from this frequency range.

3. The network according to claim 2, **characterized in that** the wireless link (6) comprises an electronic device (12) associated with the antenna (5) and an electronic device (13) associated with the bay (7), and a wireless transmission link (14) between both devices.

4. The network according to claim 3, **characterized in that** the electronic antenna device (12) comprises analog/digital converting means (18), and the electronic bay device (13) comprises digital/analog converting means (30).

5. The network according to any of claims 3 or 4, **characterized in that** the antenna and bay (13) electronic devices comprise means for compressing or decompressing the signals to be transmitted.

6. The network according to any of claims 1 to 5, **characterized in that** for a multiband antenna (5), the electronic antenna device (12) comprises means for identifying the channel on which the signals to be transmitted are received by the antenna.

7. The network according to any of claims 1 to 6, **characterized in that** the electronic antenna device (12) comprises means for checking the presence of a bay (7) capable of operating at a frequency at which the signals to be transmitted are received by the antenna (5).

8. The network according to any of claims 1 to 7, **characterized in that** it comprises a plurality of bays (7), each of which is capable of operating at a predetermined frequency, with the bays being capable of communicating with an appropriate multiband antenna.

## Patentansprüche

1. Lokales Kommunikationsnetz zwischen einem ersten Mobilgerät, wie etwa einem Mobiltelefon, und einem zweiten Gerät, wie etwa einem Festtelefon, über eine Relaisantenne und einen Datenübertragungsabschnitt, der die Antenne mit einem Einschub fester Radiofrequenz verbindet, wobei der Übertragungsabschnitt ein drahtloser Radiofrequenz-Übertragungsabschnitt ist, **dadurch gekennzeichnet, dass** der Übertragungsabschnitt zwischen der Antenne (5) und dem Radiokommunikationseinschub (7) eine Vorrichtung (23) umfasst, um das Hochfrequenzsignal, das von der Antenne (5) empfangen wird, auf ein Niederfrequenzniveau zu demodulieren, um das Modulationssignal oder den Hochfrequenzträger aus dem empfangenen Signal zu entfernen.

2. Kommunikationsnetz nach Anspruch 1, **dadurch gekennzeichnet, dass** der drahtlose Abschnitt (6) Mittel umfasst zum Senden und Empfangen von Signalen auf einer Frequenz, die zwischen 400 MHz und 180 GHz liegt, wobei die Frequenz in diesem Frequenzbereich wählbar ist.

3. Netz nach Anspruch 2, **dadurch gekennzeichnet, dass** der drahtlose Abschnitt (6) eine elektronische Vorrichtung (12), die mit der Antenne (5) verknüpft ist, und eine elektronische Vorrichtung (13), die mit dem Einschub (7) verknüpft ist, und einen drahtlosen Übertragungsabschnitt (14) zwischen diesen beiden Vorrichtungen umfasst.

4. Netz nach Anspruch 3, **dadurch gekennzeichnet, dass** die elektronische Antennenvorrichtung (12) Analog/Digital-Wandlermittel (18) umfasst und die elektronische Einschubvorrichtung (13) Digital/Analog-Wandlermittel (30) umfasst.

5. Netz nach einem der Ansprüche 3 oder 4, **dadurch gekennzeichnet, dass** die elektronischen Vorrichtungen von Antenne und Einschub (13) Mittel zum Komprimieren oder Dekomprimieren der zu sendenden Signalen umfassen.

6. Netz nach einem der Ansprüche 1 bis 5, **dadurch gekennzeichnet, dass** bei einer Multibandantenne (5) die elektronische Antennenvorrichtung (12) Mittel zum Identifizieren des Kanals, auf dem die zu sendenden Signale von der Antenne empfangen werden, umfasst.

7. Netz nach einem der Ansprüche 1 bis 6, **dadurch gekennzeichnet, dass** die elektronische Antennenvorrichtung (12) Mittel zum Überprüfen des Vorhandenseins eines Einschubs (7), der in der Lage ist, auf der Frequenz zu funktionieren, auf der die zu sendenden Signale von der Antenne (5) empfangen werden, umfasst.

8. Netz nach einem der Ansprüche 1 bis 7, **dadurch gekennzeichnet, dass** eine Vielzahl von Einschüben (7) umfasst, von denen jeder in der Lage ist, auf einer vorherbestimmten Frequenz zu funktionieren, wobei diese Einschübe in der Lage sind, mit einer geeigneten Multibandantenne zu kommunizieren.
